**Europäisches Patentamt**

**European Patent Office**

**Office européen des brevets**

(19)

(11) Veröffentlichungsnummer: **0 001 076**
**B1**

(12) ## EUROPÄISCHE PATENTSCHRIFT

(45) Veröffentlichungstag der Patentschrift: **15.07.81**

(51) Int. Cl.³: **E 04 C 1/40, E 04 B 1/88**

(21) Anmeldenummer: **78100749.7**

(22) Anmeldetag: **25.08.78**

(54) Hohlblockstein.

(30) Priorität: **01.09.77 DE 2739409**

(43) Veröffentlichungstag der Anmeldung:
**21.03.79 Patentblatt 79/6**

(45) Bekanntmachung des Hinweises auf die Patenterteilung:
**15.07.81 Patentblatt 81/28**

(84) Benannte Vertragsstaaten:
**BE CH FR GB NL SE**

(56) Entgegenhaltungen:
**CH - A - 420 555**
**DE - A - 1 484 273**
**DE - A - 1 918 816**
**DE - A - 2 233 212**
**DE - A - 2 518 383**
**DE - C - 817 649**
**FR - A - 1 084 475**
**FR - A - 1 092 832**
**FR - A - 2 181 619**
**FR - A - 2 201 377**
**FR - A - 2 281 467**
**FR - A - 2 292 081**
**FR - A - 2 307 096**
**US - A - 1 934 788**

(73) Patentinhaber: **Firma Heinrich Oltmanns**
**D-2905 Edewecht/Jeddeloh 1 (DE)**

(72) Erfinder: **Granz, Axel, Ing.Grad.**
**Osterkampsweg 71a**
**D-2900 Oldenburg (DE)**
Erfinder: **Oltmanns, Heinrich**
**D-2905 Jeddeloh I (DE)**

(74) Vertreter: **Hauck, Hans, Dipl.-Ing. et al,**
**Patentanwälte Dipl.-Ing.H.Hauck, Dipl.-**
**Phys.W.Schmitz, Dipl.-Ing.E.Graalfs, Dipl.-**
**Ing.W.Wehnert, Dipl.-Phys.W.Carstens Dr.-**
**Ing.W.Döring Neuer Wall 41**
**D-2000 Hamburg 36 (DE)**

Courier Press, Leamington Spa, England.

## Hohlblockstein

Die Erfindung betrifft einen Hohlblockstein mit einer einteiligen Schale aus im wesentlichen gebundenen keramischen Rohstoffen und mindestens einer ersten Lochreihe parallel zur Längsachse mit zur Lagerfläche senkrechten Löchern und mindestens einer dazu parallelen zweiten Lochreihe, deren zur Lagerfläche senkrecht laufende Löcher mit einem leichten, wärmedämmenden Material gefüllt sind.

Ein derartiger Hohlblockstein ist bekannt (FR - A 2307096). Gerade Leichtbausteine aus gebundenem keramischem Material mit zellenförmigem Aufbau sind nicht geeignet, besonderen Anforderungen im Hinblick auf Schalldämpfung zu begegnen. Das wärmedämmende Material trägt in dieser Hinsicht ebenfalls nicht dazu bei.

Es ist ferner eine sandwichartige Wandplatte bekannt, insbesondere für Fortighäuser, bei der eine z. B. aus Hartfasermaterial bestehende Platte mit einer einzigen Lochreihe versehen ist, die beidseitig mit einer Deckschicht beschichtet ist, beispielsweise aus Sperrholz. In die Löcher der einzigen Lochreihe ist hälftig jeweils leichtes wärmedämmendes und schweres schalldämpfendes Material eingebracht (DE A - 1 484 273). Das Einbringen von schwerem und leichtem Material in ein einziges Loch ist außerordentlich aufwendig und erfordert zusätzliche Werkzeuge.

Schließlich ist ein Wandaufbau bekannt, bei dem eine tragende Rahmenkonstruktion Zwischenräume zwischen Abdeckplatten aufweist, in welche Zwischenräume sowohl Wärmedämm- als auch Schalldämpfstoffe eingebracht sind. Bei dem bekannten Wandaufbau handelt es sich jedoch um eine mehrschalige Bauweise (DE - A - 2233212).

Der Erfindung leigt die Aufgabe zugrunde, einen Hohlblockstein aus keramisch gebundenen Rohstoffen zu schaffen, der die geforderten Eigenschaften wie Wärmedämmung, Schalldämpfung und Wärmespeichervermögen in hervorragender Weise vereint und gleichwohl wenig aufwendig ist in der Herstellung, dem Transport und der Handhabung.

Diese Aufgabe wird erfindungsgemäß dadurch gelöst, daß die Löcher der ersten Lochreihe bzw. -reihen mit einem schwerem, schalldämmendem Füllmaterial gefüllt sind.

Der erfindungsgemäß Hohlblockstein verwendet eine Schale aus gebundenen keramischen Rohstoffen, welche bekanntlich ein günstiges Feuchteverhalten an den Tag legen. Es braucht daher nicht befürchtet zu werden, daß das in einer zweiten Lochreihe engefüllte wärmedämmende Material durch Feuchtigkeit unbrauchbar wird und seine Wärmedämmeigenschaften einbüßt. Mithin wird durch das wärmedämmende Material in einer ersten Lochreihe ein an sich bereits verhältnismäßig gut wärmedämmender Hohlblockstein in seiner Wärmedämmung verbessert. Mit Hilfe der erfindungsgemäßen Maßnahme, in die Löcher einer ersten Lochreihe schweres Füllmaterial einzufüllen, wird zugleich eine wesentliche Erhöhung des Wärmespeichervermögens erreicht. Durch das schwere Füllmaterial wird die Temperaturträgheit der Wand somit erhöht. Während herkömmliche, besonders auf Wärmedämmung hin konzipierte Außenwände bei sommerlicher Sonneneinstrahlung eine Klimatisierung der Räume erfordern, entfällt diese Notwendigkeit bei einer Wand mit hinreichendem Warmespeichervermögen. Durch eine sinnvolle Anordnung der Löcher mit dem wärmedämmendem Material und der Löcher mit dem schweren Füllmaterial wird außerdem eine erhebliche Verbesserung des Temperatur-Amplitudenverhältnisses erreicht, d.h. eine mit dem erfindungsgemäßen Hohlblocksteinen aufgebaute Wand bildet einen thermischen Puffer, der als natürlicher Regulator gegen kurzfristige tägliche Temperaturspitzen sowohl nach unten wie nach oben wirkt.

Darüber hinaus ermöglicht der erfindungsgemäß ausgebildete Hohlblockstein auch eine außerordentliche Schalldämpfung, und zwar sowohl gegenüber Luft- als auch Körperschall. Schweres Baumaterial ist bekanntlich besonders günstig im Hinblick auf Luftschall. Dies trifft jedoch nicht zu auf den Körperschall, im Gegenteil, stellen Betonwände besonders günstige Körperschalleiter dar. Um eine ausreichende Schalldämpfung insgesamt zu erzielen, ist eine schichtweise Anordnung von schallharten und schallweichen Stoffen erforderlich. Bei dem erfindungsgemäßen Hohlblockstein ist die schichtweise, getrennte Anordnung von schallharten und schallweichen Stoffen optimal verwirklicht.

Mit Hilfe des erfindungsgemäß ausgebildeten Hohlblocksteins wird in einschaliger Bauweise ein mehrschichtiger Wandaufbau ermöglicht. Darüber hinaus ermöglicht er eine preiswerte Herstellung und eine einfache Verarbeitung.

Der erfindungsgemäße Stein kann in herkömmlicher Weise vermauert werden oder in verschiedener Form lose aufeinandergesetzt oder-geklebt werden.

Bei dem erfindungsgemäßen Hohlblockstein besteht die Schale aus einem keramischen Material, das eine ausreichende Porosität aufweist zwecks Feuchtigkeitsableitung. Gemäß einer Ausgestaltung der Erfindung kann die Schale aus Ziegelmaterial bestehen. In einer weiteren erfindungsgemäß Ausgestaltung hierzu ist vorgesehen, daß die Schale aus porosiertem Leichtbauziegel besteht, insbesondere mit durch thermische Zersetzung von vorgeschäumten Polystyrolkügelchen gebildeten Poren.

Alternativ hierzu kann erfindungsgemäß auch vorgesehen sein, daß die Schale aus Blähton besteht. Blähton hat ebenfalls noch annehmbares Feuchteverhalten, ist jedoch in dieser Hinsicht ungünstiger als Ziegelmaterial, insbesondere porosiertes Ziegelmaterial.

Der erfindungsgemäße Stein ist für beliebige Formate Verwendbar. Insbesondere für großformatige Steine ist es vorteilhaft, wenn erfindungsgemäß zusätzliche Luftlöcher zwischen den Lochreihen und/oder zwischen Lochreihen und Steinaußenseite vorgesehen ist. Die zusätzlichen Luftlöcher können bei porosiertem Ziegelmaterial in üblicher Weise ausgebildet sein, so daß der Stein etwa eine gitterförmige Struktur erhält.

Anstelle einer einzigen Lochreihe für wärmedämmendes bzw. schalldämmendes Material können auch deren mehrere vorgesehen sein, wobei es überdies zweckmäßig ist, die Löcher benachbarter Lochreihen versetzt zueinander anzuordnen, um die Länge der Stege zwischen den Löchern zu vergrößern.

Als schalldämmendes Material können übliche Baustoffe mit verhältnismäßig großer Dichte Verwendung finden, die sich für das Einbringen in Löcher eignen. Eine Ausgestaltung der Erfindung sieht hierzu vor, daß als schweres Material Beton, Sand, gebundener Sand oder Mörtel verwendet wird. Große Feuchtigkeit enthaltende Materialien, wie Beton oder Mörtel können bedenkenfrei eingesetzt werden, da das keramische Material der Schale für eine ausreichende Entfeuchtung Sorge trägt.

Das schwere Füllmaterial wird entweder im schüttbaren Zustand oder als vorgeformte feste Einsatzstücke eingebracht. Die endgültige Fertigstellung des erfindungsgemäßen Hohlblocksteins kann unmittelbar in Verbindung mit der Herstellung der keramischen Schale, vor der Errichtung einer Wand oder auch an einem getrennten Ort erfolgen, beispielsweise Einbringen des schweren Füllmaterials beim Baustoffhändler.

Wird das schwere Material vor dem Vermauern eingefüllt, muß dafür gesorgt werden, daß es ausreichend fest in den Löchern sitzt. Es ist daher zweckmäßig, das schwere Material durch Bindewirkung ausreichend fest in den Löchern zu verankern, was etwa bei Verwendung von Mörtel oder Beton keine Schwierigkeiten bereitet. Bei festen Einsatzstücken können jedoch auch reib- oder formschlüssig wirkende Verankerungsmittel vorgesehen werden.

Als wärmedämmendes Material kommt etwa Fasermaterial oder leihtes Kunststoffmaterial in Frage. Im letzteren Fall kann gemäß einer Ausgestaltung der Erfindung geschäumter Kunststoff verwendet werden. Alternativ hierzu ist auch möglich, Kunststoffgranulat einzufüllen. Selbstverständlich ist auch bei Verwendung von Kunststoffmaterial möglich, dieses in festen Einzelstücken vorzuformen und in die Löcher des Steines passend einzusetzen. Werden die in die Lochreihen einzufüllenden Materialien erst während der Errichtung einer Wand eingefüllt, was mit Mörtel schon aus der FR - A 2281467 allgemein bekannt ist, so ist es möglicherweise zweckmäßig, die Löcher der Lochreihen durchgehend zwischen den Lagerflächen zu gestalten. Zwecks besserer Verankerung der aufgenommenen Stoffe kann es zweckmäßig sein, die Löcher taschenartig zu formen, wobei die Öffnung zur oberen Lagerfläche hin gerichtet ist.

Ausführungsbeispiele der Erfindung werden nachfolgend anhand von Zeichnungen näher beschrieben.

Fig. 1 zeigt schematisch die Draufsicht auf eine erste Ausführungsform des erfindungsgemäßen Hohlblocksteins.

Fig. 2 zeigt schematisch die Draufsicht auf eine zweite Ausführungsform des erfindungsgemäßen Hohlblocksteins.

Fig. 3 zeigt schematisch die Draufsicht auf eine dritte Ausführungsform der erfindungsgemäßen Hohlblocksteins.

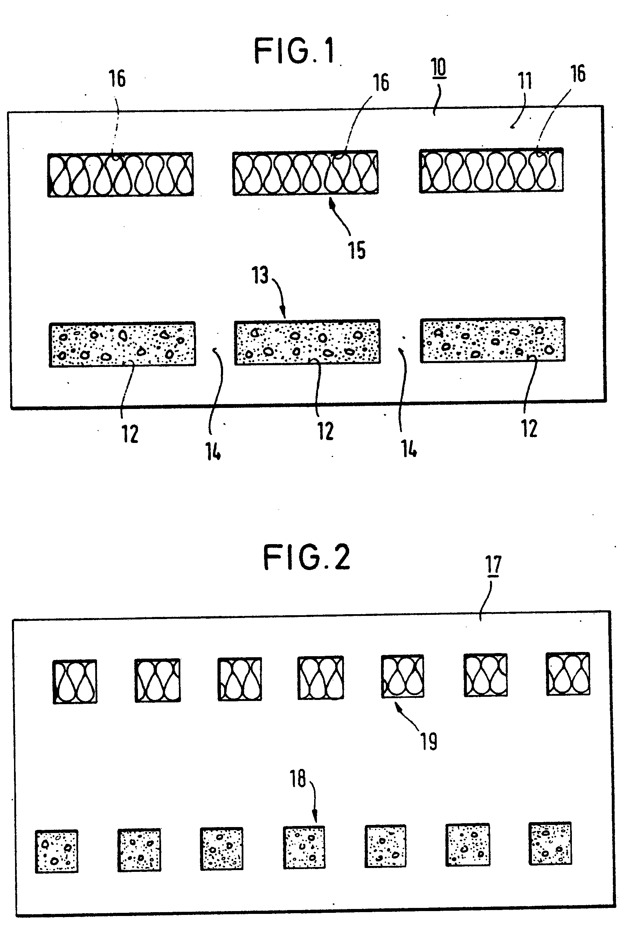

Der quaderförmige Stein 10 nach Fig. 1 besteht aus einem gebundenen keramischen Material, vorzugsweise Ziegel, insbesondere porosiertes Ziegelmaterial. Er besitzt von einer oberen Lagerflache 11 ausgehend eine erste aus drei durchgehenden Löchern 12 bestehende Lochreihe 13. Zwischen den Löchern 12 verlaufen Stege 14. Eine zweite Lochreihe 15 parallel zur ersten Lochreihe 13 weist wiederum drei Löcher 16 auf. Die Löcher 12 sind mit einem schweren Material, beispielsweise Sand, gebundener Sand, Mörtel oder Beton gefüllt, wobei die Füllung als fester Einsatz, der in die Löcher 12 eingeschoben und hier in irgendeiner geeigneten Art und Weise gehalten werden kann, ausgebildet sein kann oder in die Löcher 12 eingeschüttet wird, um sich mit der Lochwandung zu verbinden. Die schwere Füllung der Löcher 12 dient zur Verbesserung der Schalldämmung und der Wärmespeicherfähigkeit des gezeigten Steines 10. Eventuell in der Füllung vorhandene Restfeuchte kann durch die in jedem Fall vorhandene Porosität des Steinmaterials entweichen.

Die Löcher 16 der zweiten Lochreihe 15 sind mit einem leichten wärmedämmenden Material, wie Polyurethanschaum, Polystyrol oder einem anderen schlecht wärmeleitenden Material gefüllt. Die Füllung kann wiederum als fester Einsatz oder in sonstiger Form eingebracht und in den Löchern verankert werden, beispielsweise durch Ausschäumen der Löcher.

Der Verlauf des Temperaturgradienten von innen nach außen macht erforderlich, daß die zweite Lochreihe 15 mit dem wärmedämmenden Material auf der der Außenseite des Steines zugekehrten Seite liegt, während die andere Lochreihe 13 mehr der Innenseite des Steines 10) zugewandt ist. Selbstverständlich kann der Stein 10 mit einer zusätzlichen Lochanordnung (Luftlöcher) versehen werden, was hier jedoch nicht dargestellt ist.

In Fig. 2 ist ein ähnlicher Stein wie in Fig. 1 dargestellt mit einer Schale 17 aus gebundenem keramischem Material und einer ersten Lochreihe 18 und einer zweiten Lochreihe 19. Der Unterschied zu den Löchern nach Fig. 1 liegt lediglich darin, daß die Größe der Öffnungen erheblich geringer ist und sie zueinander in Querrichtung versetzt angeordnet sind. Die Löcher der Lochreihen 18, 19 können im übrigen wie die Löcher der Lochreihen 13 und 15 des Steines nach Fig. 1 gefüllt werden.

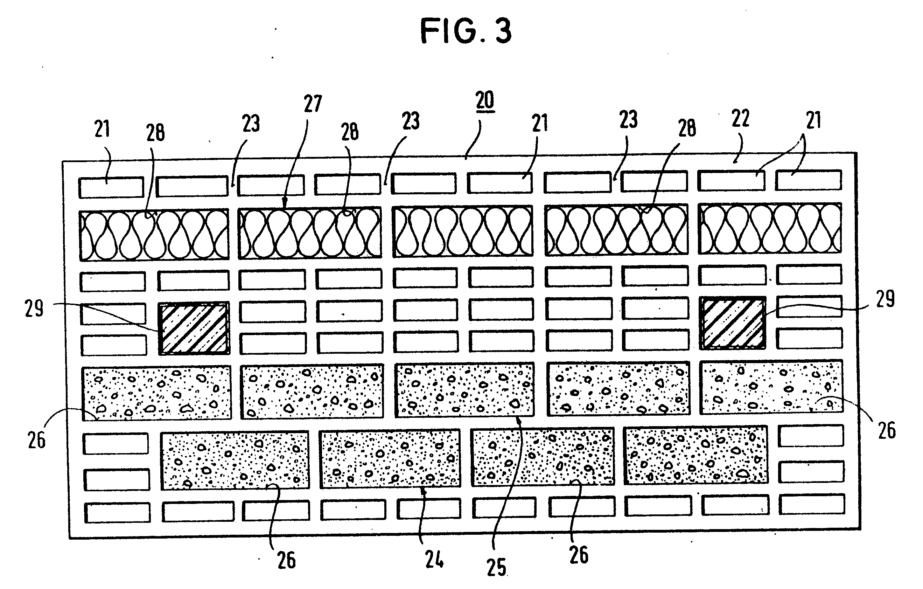

In Fig. 3 ist ein Stein dargestellt, der aus einem porösen Ziegelmaterial besteht und eine gitterartige Struktur aufweist mit länglichen rechteckigen durchgehenden Luftlöchern 21, die von der oberen Lagerfläche 22 bis zur unteren nicht zu sehenden Lagerfläche führen. Die Löcher 21 sind durch verhältnismäßig schmale Stege 23 voneinander getrennt. Parallel zur ersten Reihe der Löcher auf der Innenseite des Steines 20 sind zwei parallele Lochreihen 24, 25 angeordnet, deren Löcher 26 um ein Vielfaches im Querschnitt größer sind als die Löcher 21.

Die Löcher 26 der Lochreihen 24, 25 sind quer zueinander versetzt und mit einem schweren Material gefüllt, etwa in der Weise wie dies im Zusammenhang mit den Figuren 1 und 2 beschrieben wurde. Parallel zu der Reihe der Löcher 21, die der Außenseite des Steines 20 zugewandt ist, ist eine Lochreihe 27 angeordnet mit Löchern 28, deren Querschnitt dem der Löcher 26 entspricht und die mit einem leichten wärmedämmenden Material gefüllt sind entsprechend den Löchern 16 bei der Ausführungsform nach Fig. 1 schließlich sind noch zwei Grifflöcher 29 vorgesehen.

Die Löcher 26 und 28 sind gegenüber den Luftlöchern 21 durch Stege voneinander getrennt, die dem Querschnitt der Stege 23 entspechen, so daß nur verhältnismäßig enge Brücken für die Übertragung von Wärme und Schall vorliegen.

Es versteht sich, daß die in den Figuren 1 bis 3 dargestellten Steine beliebige Formate und äußere Gestalt haben können, also beispielsweise auch irgendwie gestaltete Formsteine sein können. Auch die Verarbeitung, ob fugenlos oder mit Fugen eingesetzt, spielt im vorliegenden Zusammenhang keine besondere Rolle. Schließlich können die gezeigten Steine auch eingesetzt werden für beliebige Wände, aber vor allem dort, wo Temperaturunterschiede nicht ausgeglichen werden sollen und eine Schalldämmung erwünscht ist.

## Patentansprüche

1. Hohlblockstein mit einer einteiligen Schale aus im wesentlichen gebundenen keramischen Rohstoffen und mindestens einer ersten Lochreihe parallel zur Längesachse mit zur Lagerfläche senkrechten Löchern und mindestens einer dazu parallelen zweiten Lochreihe, deren zur Lagerfläche senkrecht verlaufende Löcher mit einem leichten, wärmedämmenden Material gefüllt sind, dadurch gekennzeichnet, daß die Löcher der ersten Lochreihe bzw, -reihen (13, 18, 24, 25) mit einem schweren schalldammenden Füllmaterial gefüllt sind.

2. Hohlblockstein nach Anspruch 1, dadurch gekennzeichnet, daß die Schale (10, 17, 20) aus Ziegelmaterial besteht.

3. Hohlblockstein nach Anspruch 1, dadurch gekennzeichnet, daß die Schale (10, 17, 20) aus Blähton besteht.

4. Hohlblockstein nach Anspruch 2, dadurch gekennzeichnet, daß die Schale (10, 17, 20) aus porosiertem Leichtbauziegel besteht, insbesondere mit durch thermische Zusetzung von vorgeschäumten Polystyrolkügelchen gebildeten Poren.

5. Hohlblockstein nach einem der Ansprüche 1 bis 4, gekennzeichnet durch zusätzliche Luftlöcher (21) zwischen den Lochreihen und Steinaußenseite.

6. Hohlblockstein nach einem der Ansprüche 1 bis 5, dadurch gekennzeichnet, daß mehrere erste, zweite und/oder dritte Lochreihen vorgesehen sind.

7. Hohlblockstein nach einem Ansprüche 1 bis 6, dadurch gekennzeichnet, daß die Löcher der Lochreihen zueinander versetzt angeordnet sind.

8. Hohlblockstein nach einem der Ansprüche 1 bis 7, dadurch gekennzeichnet, daß als schweres Material Beton, Sand, gebundener Sand oder Mörtel verwendet wird.

9. Hohlblockstein nach einem der Ansprüche 1 bis 8, dadurch gekennzeichnet, daß das schwere Material in schüttbarem Zustand eingefüllt ist.

10. Hohlblockstein nach einem der Ansprüche 1 bis 8, dadurch gekennzeichnet, daß das schwere Material als festes Einsatzstück vorgeformt und eingefüllt ist.

11. Hohlblockstein nach einem der Ansprüche 1 bis 10, dadurch gekennzeichnet, daß das leichte Material in den Löchern ausgeschäumter Kunststoff ist.

12. Hohlblockstein nach einem der Ansprüche 1 bis 10, dadurch gekennzeichnet, daß das leichte Material als Kunststoffgranulat eingefüllt ist.

13. Hohlblockstein nach einem der Ansprüche 1 bis 10, dadurch gekennzeichnet, daß das leichte Material als festes vorgeformtes Einsatzstück eingefüllt ist.

14. Hohlblockstein nach einem der Ansprüche 1 bis 13, dadurch gekennzeichnet, daß die Löcher (12, 16, 26, 28) zumindest teilweise durchgehend sind.

15. Hohlblockstein nach einem der Ansprüche 1 bis 13, dadurch gekennzeichnet, daß die Löcher (12, 16, 26, 28) zumindest teilweise Sacklöcher sind.

## Claims

1. A hollow building block comprising a one-piece shell of essentially bonded ceramic crude materials and having at least one first row of apertures in parallel with the longitudinal axis with the apertures in parallel with the longitudinal axis with the apertures disposed at right angles with respect to the supporting surface and at least one second row of apertures in parallel therewith whose apertures which are extending at right angles with respect to the supporting surface are filled with a light-weight thermally insulating material, characterized in that the apertures of the first row or rows of apertures (13, 18, 24, 25) are filled with a heavy sound attenuating filling material.

2. The hollow building block according to claim 1, characterized in that the shell (10, 17, 20) consists of brick material.

3. The hollow building block according to claim 1, characterized in that the shell (10, 17, 20) consists of inflatable clay.

4. The hollow building block according to claim 2, characterized in that the shell (10, 17, 20) consists of light-weight brick material having pores formed therein, especially pores formed by thermal decomposition of preliminarily foamed small polystyrene balls.

5. The hollow building block according to any one of the claims 1 to 4, characterized by additional air-holes (21) between the rows of apertures and the outside of the building block.

6. The hollow building block according to any one of the claims 1 to 5, characterized in that several first, second and/or third rows of apertures are provided.

7. The hollow building block according to any one of the claims 1 to 6, characterized in that the apertures of the rows of apertures are offset with respect to each other.

8. The hollow building block according to any one of the claims 1 to 7, characterized in that concrete, sand, bonded salt or mortar is used as the heavy material.

9. The hollow building block according to any one of the claims 1 to 8, characterized in that the heavy material is filled-in in a condition ready to be poured.

10. The hollow building block according to any one of the claims 1 to 8, characterized in that the heavy material is pre-shaped as a solid insert member and filled in.

11. The hollow building block according to any one of the claims 1 to 10, characterized in that the light-weight material in the apertures is foamed synthetic material.

12. The hollow building block according to any one of the claims 1 to 10, characterized in that the light-weight material is filled-in as a synthetic granular material.

13. The hollow building block according to any one of the claims 1 to 10, characterized in that the light-weight material is filled-in in the form of a pre-shaped solid insert member.

14. The hollow building block according to any one of the claims 1 to 13, characterized in that the apertures (12, 16, 26, 28) are at least in part through-going apertures.

15. The hollow building block according to any one of the claims 1 to 13, characterized in that the apertures (12, 16, 26, 28) are at least in part blind holes.

## Revendications

1. Bloc de construction creux comprenant une enveloppe d'une seule partie constituée essentiellement de matériaux céramiques liés, au moins une première rangée de trous parallèle à l'axe longitudinal du bloc, comportant des trous perpendiculaires à la surface support et au moins une deuxième rangée de trous qui est parallèle à la précédente et dont les trous perpendiculaires à la surface support sont remplis d'un matériau calorifuge léger, caractérisé en ce que les trous de la première rangée ou des premières rangées (13, 18, 24, 25) sont remplis d'un matériau de remplissage lourd et insonorisant.

2. Bloc de construction selon la revendication 1, caractérisé en ce que l'enveloppe (10, 17, 20) est faite de matériau à base de brique.

3. Bloc de construction creux selon la revendication 1, caractérisé en ce que l'enveloppe (10, 17, 20) est constituée en argile expansée.

4. Bloc de construction selon la revendication 2, caractérisé en ce que l'enveloppe (10, 17, 20) est faite de brique poreuse pour construction légère, en particulier avec des pores formés par décomposition thermique de granules de polystyrène obtenus par moussage préalable.

5. Bloc de construction selon l'une quelconque des revendications 1 à 4, caractérisé en ce qu'il comprend des trous d'aération supplémentaires (21) entre les rangées de trous et le côté extérieur de l'élément.

6. Bloc de construction selon l'une quelconque des revendications 1 à 5, caractérisé en ce qu'il comprend plusieurs première, deuxième et/ou troisième rangées de trous.

7. Bloc de construction selon l'une quelconque des revendications 1 à 6, caractérisé en ce que les trous des rangées de trous sont disposés de manière décalée les uns par rapport aux autres.

8. Bloc de construction selon l'une quelconque des revendications 1 à 7, caractérisé en ce qu'on emploie comme matériau lourd du béton, du sable, du sable lié ou du mortier.

9. Bloc de construction selon l'une quelconque des revendications 1 à 8, caractérisé en ce que le matériau lourd est déversé pour le remplissage à l'état meuble.

10. Bloc de construction selon l'une quelconque des revendications 1 à 8, caractérisé en ce que le matériau lourd est préfaçonné comme une pièce de charge solide et est mis en place.

11. Bloc de construction selon l'une quelconque des revendications 1 à 10, caractérisé en ce que le matériau léger dans les trous est un matériau synthétique moussé.

12. Bloc de construction selon l'une quelconque des revendications 1 à 10, caractérisé en ce que le matériau léger est introduit comme granules de matériau synthétique.

13. Bloc de construction selon l'une quelconque des revendications 1 à 10, caractérisé en ce que le matériau léger est mis en place comme une pièce de charge solide préfraçonnée.

14. Bloc de construction selon l'une quelconque des revendications 1 à 13, caractérisé en ce que les trous (12, 16, 26, 28) sont au moins en partie des trous de passage.

15. Bloc de construction selon l'une quelconque des revendications 1 à 13, caractérisé en ce que les trous (12, 16, 26, 28) sont au moins en partie des trous borgnes.

# FIG.1

# FIG.2

# FIG. 3